# EUROPÄISCHE PATENTSCHRIFT

(11) **EP 1 691 269 B1**
(45) Veröffentlichungstag und Bekanntmachung des Hinweises auf die Patenterteilung: **21.04.2010**
(21) Anmeldenummer: 05002658.2
(22) Anmeldetag: 09.02.2005
(51) Int. Cl.: G06F 3/12

(54) **Drucksystem**
Printing system
Système d'impression

(43) Veröffentlichungstag der Anmeldung: 16.08.2006
(73) Patentinhaber: Deutsche Post AG, 53113 Bonn (DE)
(72) Erfinder: Kranz, Jürgen, 50374 Erftstadt (DE); Westerweller, Jörg, 51570 Windeck/Rosbach (DE)
(74) Vertreter: Jostarndt, Hans-Dieter

(56) Entgegenhaltungen:
- EP-A- 1 003 091
- EP-A- 1 178 393
- EP-A2- 1 024 424
- US-A1- 2004 073 720
- US-B1- 6 314 476
- US-B1- 6 452 692

## Beschreibung

Die Erfindung betrifft ein Drucksystem, umfassend einen Drucker-Spooler, der Druckdaten an wenigstens einen Drucker übermittelt, wobei der Drucker beim Empfang von Druckdaten Statusinformationen bereitstellt.

Besondere Bedeutung haben Informationen über den Status eines Druckers beim Ausdrucken geldwerter Informationen, wie beispielsweise Einträge in ein Sparbuch oder Postwertzeichen, da das Drucken hier mit einer Verbuchung von Geldbeträgen verbunden ist. Ein erneutes Erzeugen und Ausdrucken von Druckaufträgen ist dabei sehr problematisch.

Oftmals erfolgt das Ausdrucken von geldwerten Informationen zudem in komplexen Datenverarbeitungssystemen, die verschiedene Vorgangsbearbeitungsprogramme zum Bearbeiten von Geschäftsvorgängen und verschiedene Druckgeräte zum Drucken umfassen. Derartige Datenverarbeitungssysteme werden beispielsweise in Filialen der Anmelderin oder anderen Dienstleistungsunternehmens betrieben, die ihren Kunden insbesondere Logistik- und Finanzdienstleistungen anbieten.

Für eine Vielzahl von Geschäftsvorgängen, wie beispielsweise eine Abbuchung eines Geldbetrages von einem Sparbuch, einer Einzahlung eines Geldbetrages auf ein Sparbuch oder dem Verkauf von Postwertzeichen werden in einem derartigen Datenverarbeitungssystem Statusinformationen über verschiedene Drucker eines Drucksystems der Datenverarbeitungsanlage, wie etwa Sparbuchdrucker oder Belegdrucker, benötigt.

Bei der üblichen Verarbeitung von Druckaufträgen durch ein Betriebssystem eines Computers, wie beispielsweise das Betriebssystem WINDOWS, werden Druckdaten von einem so genannten Druckertreiber für den entsprechenden Drucker aufbereitet und an einen Drucker-Spooler übergeben, welcher die Druckdaten an den Drucker weiterleitet.

Handelt es sich um einen Drucker, der eine bidirektionale Kommunikation unterstützt, werden bei der Weiterleitung von Druckdaten üblicherweise Statusinformationen über den Drucker abgefragt, um zu ermitteln, ob die Druckdaten von dem Drucker verarbeitet werden können. Ist dies aufgrund eines Fehlers, wie beispielsweise fehlendem Papier oder fehlender Druckertinte, nicht der Fall, generiert der Drucker-Spooler eine entsprechende Fehlermeldung.

Insbesondere bei dem Betriebssystem WINDOWS der Firma Microsoft erfolgt die Statusabfrage jedoch nur dann, wenn ein Druckauftrag vorliegt und Druckdaten an den Drucker gesendet werden.

Zur fortlaufenden Abfrage von Statusinformationen über einen Drucker ist es aus der europäischen Offenlegungsschrift EP 1 178 393 A2 bekannt, einen Portmonitor einzurichten der in regelmäßigen Zeitabständen Statusinformationen über einen Drucker abfragt. Bei Änderungen des Druckerstatus' wird dabei ein Druckertreiber eines Druckerservers aktualisiert, der die Statusinformationen Druckerclients verfügbar macht.

Zur Statusabfrage werden bei dem bekannten Portmonitor so genannte Application Program Interfaces (APIs) verwendet, die innerhalb des WINDOWS Driver Development Kit zur Abfrage der Druckerschnittstelle bereitgestellt werden. Dabei besteht allerdings das Problem, dass die APIs nicht für jeden Drucker verwendet werden können.

Die europäische Patentanmeldung EP 1 003 091 A2 beschreibt ein Schnittstellensystem, welches eine I/O-Mittel zum Austausch von Daten mit externen Systemen enthält, das Druckdaten von einem Computer empfängt und über das Statusinformationen des Druckers an den Computer ausgegeben werden. Die von dem Computer empfangenen Druckdaten werden dabei in dem Schnittstellensystem aufbereit und die aufbereiteten Druckdaten in Form von Rasterdaten bzw. Videodaten an den Drucker übermittelt. Zur Überwachung des Druckerstatus ist dabei ein Kontrollmittel vorgesehen, welches die Statusinformationen von dem Drucker aufnimmt, die anhand von entsprechenden Anforderungen durch das Schnittstellensystem von dem Drucker abgefragt werden. Aus den von dem Drucker empfangenen Statusinformationen werden dann Veränderungen des Druckerstatus ermittelt und nach einer Anforderung von Statusinformationen an den Computer übermittelt.

Aus der US-Patentanmeldung US 2004/0073720 A1 geht ein Druckerserver in einem Netzwerk hervor, bei dem entsprechend vorgegebener Kriterien einer von mehreren mit dem Druckerserver verbundenen Druckern zur Bearbeitung eines Druckauftrages ausgewählt wird. Nach der Ermittlung des am besten geeigneten Druckers wird anhand einer Statusabfrage ermittelt, ob der Drucker den Druckauftrag bearbeiten kann. Ist dies der Fall, wird der Druckauftrag an den Drucker übermittelt, wobei der Server die Durchführung des Auftrags anhand von Statusinformationen überwacht, indem überprüft wird, ob der Drucker ein Kontrollsignal aussendet, welches angibt, ob der Druck beendet ist. Ferner wird permanent überprüft, ob der Drucker während der Bearbeitung des Druckauftrags eine Fehlermeldung sendet. Der Druckerserver hat dabei auch die Funktion eines Drucker-Spoolers.

Die europäische Patentanmeldung EP 1 024 424 A2 offenbart ein Drucksystem mit einem Portmonitor, der Druckdaten an den Drucker von einem Druckerspooler entgegennimmt und an den Drucker weiterleitet. Ferner fragt der Portomonitor Statusinformationen von dem Drucker ab und leitet diese an eine Anzeige weiter. Beim Empfang von Druckdaten sendet der Drucker zudem Statusinformationen an den Portmonitor, die von dem Portmonitor ebenfalls an die Anzeige weitergleitet werden.

Es ist wünschenswert, ein Drucksystem eines Betriebssystems so anzupassen, dass jederzeit Statusinformationen von einem beliebigen Drucker abgefragt werden können. Darüber hinaus ist es wünschenswert, dass die Anpassungen die Funktionalität des Drucksystems möglichst wenig beeinflussen, um diese für die Verarbeitung von Druckaufträgen nutzen zu können.

Erfindungsgemäß wird daher ein Drucksystem nach dem Patentanspruch 1 bereitgestellt.

Zweckmäßige Weiterbildungen des Drucksystems sind Gegenstand der abhängigen Ansprüche.

Das Drucksystem nach der Erfindung, umfassend einen Drucker-Spooler, der Druckdaten an wenigstens einen Drucker übermittelt, wobei der Drucker beim Empfang von Druckdaten Statusinformationen bereitstellt, zeichnet sich insbesondere dadurch aus, dass es ein Datenübertragungsmodul enthält, wobei das Datenübertragungsmodul die Druckdaten von dem Drucker-Spooler empfängt und an den Drucker weiterleitet und wobei das Datenübertragungsmodul die beim Empfang der Druckdaten von dem Drucker bereitgestellten Statusinformationen empfängt, dass es ein Abfragemodul enthält, das Statusinformationen von dem Drucker abfragt und dass es ein Synchronisationsmodul enthält, das die von dem Datenübertragungsmodul empfangenen Statusinformationen an das Abfragemodul übermittelt.

Die Abfrage von Statusinformationen über einen Drucker wird bei dem erfindungsgemäßen Drucksystem somit von einem Abfragemodul vorgenommen, das an den Drucker angepasst werden kann. Gleichzeitig wird die übliche Funktion eines Drucksystems, bei dem der Drucker beim Empfang von Druckdaten Statusinformationen bereitstellt, nicht beeinträchtigt.

Um dabei alle Statusinformationen vollständig an das Abfragemodul zu übermitteln, ist es vorgesehen, dass ein Synchronisationsmodul die von dem Drucker an den Drucker-Spooler gesendeten Statusinformationen empfängt und an das Abfragemodul übermittelt. Somit stehen dem Abfragemodul jederzeit vollständige Statusinformationen zur Verfügung.

Die Begriffe Status bzw. Statusinformation sind dabei in ihrer weitesten Bedeutung zu verstehen und umfassen insbesondere Informationen darüber, ob der Drucker eingeschaltet (online) oder ausgeschaltet (offline) ist, sowie Informationen über die Menge verfügbarer Druckmedien, wie beispielsweise Papierbögen, und verfügbarer Druckmaterialien, wie beispielsweise Druckertinte.

Da das Datenübertragungsmodul und das Abfragemodul nicht gleichzeitig auf den Drucker zugreifen können, ist es in einer bevorzugten Ausgestaltung der Erfindung vorgesehen, dass das Synchronisationsmodul die Statusabfrage durch das Abfragemodul unterbricht, während das Datenübertragungsmodul Druckdaten an den Drucker übermittelt.

In einer bevorzugten Ausführungsform der Erfindung ist es vorgesehen, dass das Abfragemodul eine Steuerungskomponente umfasst, die Steuerbefehle zum Abfragen von Statusinformationen von dem Drucker bereitstellt.

Die Anpassung des Abfragemoduls an einen bestimmten Drucker kann dabei durch eine Anpassung der Steuerungskomponente vorgenommen werden und ist damit besonders einfach und flexibel durchführbar.

In einer zweckmäßigen Ausgestaltung der Erfindung übermittelt das Datenübertragungsmodul die empfangenen Statusinformationen an den Drucker-Spooler.

Damit können die von dem Drucker beim Empfang der Druckdaten bereitgestellten Statusinformationen und insbesondere in den Statusinformationen enthaltene Fehlermeldungen in der üblichen Weise durch den Drucker-Spooler des Betriebssystems verarbeitet werden.

In der Regel umfassen Drucksysteme mehrere Drucker. In einer vorteilhaften Ausgestaltung der Erfindung ist es daher vorgesehen, dass das Abfragemodul mehrere Statusabfragestränge bereitstellt, wobei jeder Statusabfragestrang Statusinformationen von genau einem dem Statusabfragestrang zugeordneten Drucker abfragt.

Vorzugsweise ist dabei jedem Statusabfragestrang eine Steuerungskomponente zugeordnet, die Steuerbefehle zum Abfragen von Statusinformationen von dem Drucker enthält, der dem Statusabfragestrang zugeordnet ist.

Anpassungen an bestimmte Drucker können auch in dieser Ausführungsform in einfacher Weise durch eine Anpassung der entsprechenden Steuerungskomponenten vorgenommen werden, so dass das Drucksystem besonders flexibel an vorhandene Drucker angepasst werden kann.

In einer weiteren vorteilhaften Ausführungsform der Erfindung ist es vorgesehen, dass das Datenübertragungsmodul mehrere Datenübertragungsstränge bereitstellt, wobei jeder Datenübertragungsstrang Druckdaten an genau einen dem Datenübertragungsstrang zugeordneten Drucker übermittelt und Statusinformationen von diesem Drucker empfängt.

Vorzugsweise stellt das Synchronisationsmodul dabei mehrere Synchronisationsobjekte bereit, wobei jedes Synchronisationsobjekt Statusinformationen von genau einem einem Drucker zugeordneten Datenübertragungsstrang an den demselben Drucker zugeordneten Statusabfragestrang übermittelt.

Für jeden Drucker enthält der Statusabfragestrang somit jederzeit aktuelle Statusinformationen über den dem Statusabfragestrang zugeordneten Drucker.

In einer vorteilhaften Ausführungsform der Erfindung speichert das Abfragemodul die Statusinformationen in einem Speichermittel.

Vorzugsweise umfasst das Drucksystem dabei eine Standardschnittstelle, über die das Speichermittel ausgelesen werden kann.

Unter einer Standardschnittstelle wird hier eine Schnittstelle verstaden, über die insbondere eine Vielzahl unterschiedlicher Clients in standardisierter Weise auf das Speichermittel zugreifen kann.

Ferner ist es vorteilhaft, dass das Abfragemodul die Statusinformationen in regelmäßigen Zeitabständen von dem Drucker abfragt.

Bei hinreichend kurzen Zeitabständen stehen somit quasi fortlaufend aktuelle Statusinformationen zur Verfügung.

Darüber hinaus ist es vorteilhaft, dass das Abfragemodul von dem Drucker abgefragte erste Statusinformationen mit in dem Speichermittel gespeicherten zweiten Statusinformationen vergleicht, und die ersten Statusinformationen in dem Speichermittel gespeichert werden, wenn diese sich von den zweiten Statusinformationen unterscheiden.

Somit erfolgt eine Änderung der in dem Speichermittel gespeicherten Statusinformationen nur dann, wenn sich der Druckerstatus tatsächlich verändert hat. Dies ermöglicht eine sehr effiziente Überwachung eines Druckerstatus' durch einen Client mit einem minimalen erforderlichen Datenübertragungsvolumen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figur.

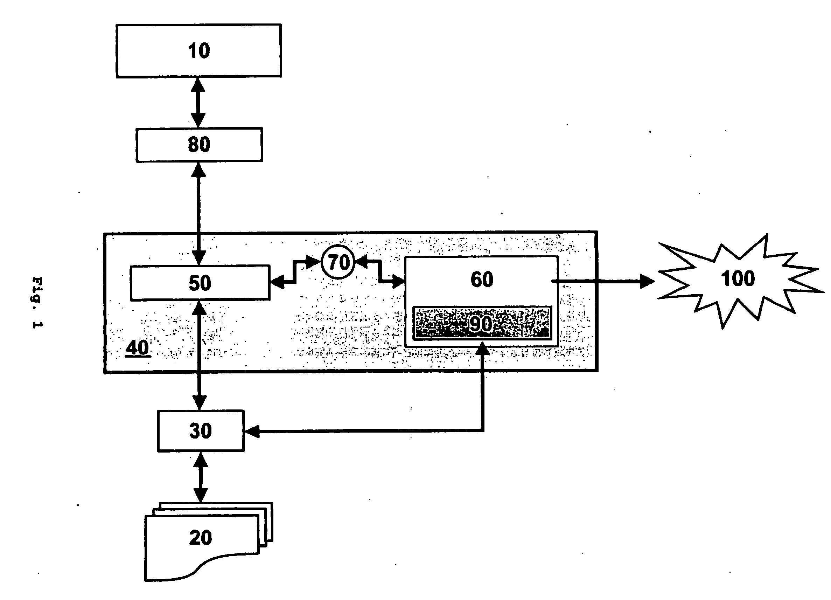

Die Figur 1 zeigt eine schematische Darstellung eines erfindungsgemäßen Drucksystems in einer vorteilhaften Ausführungsform mit den umfassten Modulen.

Im Folgenden werden bevorzugte Ausführungsbeispiele der Erfindung beschrieben, bei denen das Drucksystem in ein Datenverarbeitungssystem integriert ist, das in einer Filiale eines Dienstleistungsunternehmens betrieben wird. Es wird davon ausgegangen, dass das Dienstleistungsunternehmen eine Vielzahl von Dienstleistungen, wie insbesondere Finanz- und Logistikdienstleistungen anbietet, für die verschiedene Geschäftsvorgänge durchgeführt werden, die mit dem Ausdrucken geldwerter Informationen verbunden sind. Beispiele hierfür sind Abbuchungen von Geldbeträgen von einem Sparbuch, Einzahlungen von Geldbeträgen auf ein Sparbuch oder der Verkauf von Postwertzeichen.

Zur Durchführung der Geschäftsvorgänge enthält das Datenverarbeitungssystem Softwareprogramme bzw. Programmmodule, die in einem oder mehreren Computern ausgeführt werden, die Bestandteile der Datenverarbeitungsanlage in den Filialen sind und von dem Personal des Unternehmens bedient werden.

Bei den Computern handelt es sich vorzugsweise um Personal Computer (PC), die über eine Prozessoreinheit zur Durchführung von Berechnungen, über einen flüchtigen und einen nicht-flüchtigen Speicher sowie über ein Anzeigemittel zum Anzeigen grafischer Darstellungen und ein Eingabemittel zur Eingabe von Daten verfügen.

Als Clients haben die Softwareprogramme bzw. Programmmodule Zugriff auf einen Drucker-Host, der die Steuerung der mit ihm verbundenen Drucker vornimmt. Der Drucker-Host kann dabei als Hardwarekomponente ausgeführt sein, die mit den PCs verbunden ist bzw. in die PCs integriert ist, in denen die Softwareprogramme zur Durchführung der Geschäftsvorgänge ausgeführt werden. Gleichfalls kann es sich bei dem Drucker-Host um eine Softwarekomponente handeln, die in einem oder mehreren der in den Filialen vorhandenen PCs ausgeführt wird.

Der Drucker-Host ist mit einem oder mehreren Druckern 20 verbunden, mit denen durch die Softwareprogramme zur Bearbeitung von Geschäftvorgängen generierte Druckdaten ausgedruckt werden. Zum Ausdrucken der innerhalb des beispielhaft betrachteten Datenverarbeitungssystems anfallenden Druckdaten ist der Drucker-Host dabei beispielsweise mit einem Sparbuchdrucker, einem Bon- und Belegdrucker und einem gewöhnlichen Laserdrucker verbunden.

Insbesondere beim Ausdrucken von Druckdaten, die geldwerten Informationen entsprechen, ist es von besonderer Bedeutung, dass Statusinformationen über die mit dem Drucker-Host verbundenen Drucker 20 bereitgestellt werden. Vorzugsweise sollten diese Statusinformationen und insbesondere Fehlermeldungen der Drucker 20 dabei direkt den Softwareprogrammen zur Bearbeitung der Geschäftsvorgänge verfügbar gemacht werden, so dass von den Programmen durchgeführte buchhaltungstechnische Transaktionen die beim Ausdrucken geldwerter Informationen erforderlich sind, in Abhängigkeit der Statusinformationen durchgeführt oder unterbrochen werden können. Damit wird vor allem verhindert, dass die Transaktionen durchgeführt werden, obwohl der Druck der geldwerten Informationen aufgrund eines Fehlers in einem Drucker 20 nicht oder nicht vollständig erfolgt ist.

Die Drucker 20 sind daher so ausgeführt, dass sie eine bidirektionale Kommunikation mit dem Drucker-Host ermöglichen, wobei insbesondere Druckdaten von dem Drucker-Host an die Drucker 20 und Statusinformationen von den Druckern 20 an den Drucker-Host 10 übertragen werden können.

Die Datenverbindung zwischen dem Computer und den Druckern 20 wird über eine dem Fachmann bekannte Schnittstelle hergestellt, die ebenfalls zur bidirektionalen Datenübertragung ausgerüstet ist. Beispielsweise handelt es sich bei der Schnittstelle um die dem Fachmann bekannte standardisierte Druckerschnittstelle IEEE 1284, die in verschiedenen Betriebsmodi betrieben werden kann, die eine bidirektionale Datenübertragung zwischen den Druckern 20 und dem Drucker-Host gestatten.

Zur Verarbeitung von Druckaufträgen, die von den Softwareprogrammen an den Drucker-Host übermittelt werden, verfügt der Drucker-Host für jeden der Drucker 20 über einen Druckertreiber, der in den Druckaufträgen enthaltene Druckdaten in ein Format (Druckersprache) konvertiert, das von dem jeweiligen Drucker 20 verarbeitet werden kann. Wird das Betriebssystem WINDOWS verwendet, erfolgt die Konvertierung dabei in der üblichen dem Fachmann bekannten Weise mittels des Druckertreibers und des Graphical Device Interface (GDI) des Betriebssystems.

Von dem Druckertreiber werden die aufbereiteten Druckaufträge an einen Drucker-Spooler 10 übermittelt, der ebenfalls Bestandteil des Drucker-Hosts ist. Vorzugsweise wird dabei der Drucker-Spooler 10 des Betriebssystems verwendet, dessen Funktionen dem Fachmann bekannt sind.

Ferner umfasst der Drucker-Host einen Portmonitor 40, welcher insbesondere die Druckaufträge von dem Drucker-Spooler 10 entgegennimmt und an den zur Verarbeitung des Druckauftraugs vorgesehenen Drucker 20 übermittelt. Eine bevorzugte Ausführungsform des Portmonitors 40 ist dabei in der Figur 1 schematisch dargestellt.

Die von dem Drucker-Spooler 10 übermittelten Druckaufträge werden von dem Portmonitor 40 in dieser Ausführungsform an Druckerports entgegengenommen, die im Folgenden als logische Ports 80 bezeichnet werden. Auf die Drucker 20 greift der Portmonitor 40 über physische Ports 30 zu, welche die direkte Schnittstelle zwischen dem Drucker-Host und den Druckern 20 realisieren, die in der zuvor beschriebenen Art ausgeführt ist.

Zwischen den logischen Ports 80, auf die der Drucker-Spooler 10 zugreift, und den physischen Ports 30 besteht dabei eine eindeutige Zuordnung, die in einer Konfigurationsdatei des Portmonitors 40 gespeichert ist. Ferner wird in eine Registrierungsdatei des Betriebssystems eine Zuordnung zwischen einem logischen Port 80 und dem Drucker 20 eingetragen, der über den dem logischen Port 80 zugeordneten physischen Port 30 mit dem Drucker-Host verbunden ist. Anhand dieser Zuordnungen ermittelt der Drucker-Spooler 10 den logischen Port 80, an den Druckaufträge für einen bestimmten Drucker 20 zu übermitteln sind.

Der Drucker-Spooler 10 greift somit so auf die logischen Port 80 zu, wie auf die direkten Schnittstellen zu den Drucker 20, und kann damit in der Ausführung verwendet werden, in der er von dem Betriebssystem bereitgestellt wird. Anpassungen des Drucker-Spoolers 10 sind beim Einsatz des Portmonitors 40 daher nicht notwendig; erforderlich ist lediglich die Eintragung der genannten Zuordnung in die Registrierungsdatei des Beitriebssystems.

Innerhalb des Portmonitors 40 wird die Weiterleitung von Daten von den logischen Ports 80 an die zugeordneten physischen Ports 30 durch ein Datenübertragungsmodul 50 vorgenommen. Dieses stellt Datenübertragungsstränge bereit, die als so genannte Threads ausgeführt sind, d.h. als sequentielle Prozesse, die zur selben Zeit unabhängig voneinander durchgeführt werden. Im Folgenden werden die Datenübertragungsstränge daher als Main Threads bezeichnet.

Jeder Main Thread nimmt Druckdaten an einem logischen Port 80 entgegen und leitet diese Druckdaten an den physischen Port 30 weiter, welcher dem logischen Port 80 anhand der Konfigurationsdatei zugeordnet ist.

Wie eingangs bereits erläutert, werden von den Druckern 20 beim Empfang von Druckdaten Statusinformationen ausgegeben. Die Ausgabe dieser Statusinformationen kann dabei entweder durch einen push-orientierten Mechanismus verursacht werden, der in dem Drucker 20 implementiert ist, oder pull-orientiert aufgrund von entsprechenden Steuerbefehlen erfolgen, die von dem Drucker-Spooler 10 zusammen mit den Druckdaten an den Drucker 20 übermittelt werden.

Die von den Druckern 20 ausgegebenen Statusinformationen werden dabei von den Main Threads des Datenübertragungsmoduls 50 an den physischen Ports 30 entgegengenommen. Die Verarbeitung dieser Statusinformationen innerhalb des Main Thread wird später im Zusammenhang der Darstellung des in dem Portmonitor 40 enthaltenen Synchronisationsmoduls 70 näher beschrieben.

Zur Abfrage von Statusinformationen von einem Drucker 20, der an einen vorgegebenen physichen Port 30 angeschlossen ist, enthält der Portmonitor 40 ein Abfragemodul 60. Dieses stellt Abfragestränge bereit, die vorzugsweise ebenfalls als Threads ausgeführt sind und im Folgenden als Status Threads bezeichnet werden. Jedem physischen Port 30 ist dabei genau ein Status Thread zugeordnet, durch den Statusinformationen von diesem physischen Port 30 bzw. dem entsprechenden Drucker 20 abfragt werden.

Die Statusabfrage erfolgt dabei mittels den Status Threads zugeordnete Steuerungskomponenten 90, welche für jeden Drucker 20 bzw. jedes Druckermodell spezifische Steuerbefehle zur Statusabfrage sowie eine Bearbeitungslogik zur Auswertung der Antwort des Druckers 20 auf die Statusabfragen bereitstellen. Die Bearbeitungslogik ermittelt dabei die Statusinformationen in der von dem Drucker 20 als Antwort auf die Statusabfrage erhaltenen Zeichenkette und konvertiert sie in ein Standardformat, das von dem Drucker-Host bzw. den Drucker-Clients interpretiert bzw. verarbeitet werden kann.

In einer bevorzugten Ausführungsform der Erfindung ist es vorgesehen, dass der Status jedes mit dem Drucker-Host verbundenen Druckers 20 in regelmäßigen Zeitabständen von der Steuerungskomponente 90 abgefragt wird. Das Zeitintervall, nach dem jeweils eine Statusabfrage vorgenommen wird, ist dabei in einer Konfigurationsdatei einstellbar.

Bei den Statusinformationen, die durch das Abfragemodul 60 bzw. die Steuerungskomponenten 90 von einem Drucker 20 abgefragt werden können, handelt es sich vorzugsweise um Informationen darüber, ob der Drucker 20 eingeschaltet (online) oder ausgeschaltet (offline) ist. Ferner kann das Vorhandensein von Druckmedien wie beispielsweise Papierbögen oder das Vorhandensein von Verbrauchsmaterialien des Druckers 20 wie beispielsweise Druckertinte oder Toner überprüft werden.

Handelt es sich bei dem Drucker 20 um einen Sparbuchdrucker, kann so beispielsweise anhand einer Abfrage der Verfügbarkeit von Druckmedien festgestellt werden, ob ein Sparbuch in den Drucker eingelegt worden ist.

Die Abfrage von Statusinformationen von einem Drucker 20 durch einen Status Thread kann jedoch nicht vorgenommen werden, während durch den diesem Drucker 20 zugeordneten Main Thread Druckdaten an den Drucker 20 übermittelt werden, da jeweils nur ein Thread auf einen physischen Port 30 zugreifen kann. Daher ist eine Synchronisation des Main Threads und des Status Threads erforderlich.

Zur Synchronisation des Main Threads und des Status Threads enthält der Portmonitor 40 das Synchronisationsmodul 70, das für jeden physischen Port 30 ein Synchronisationsobjekt bereit, welches den Main Thread und den Status Thread synchronisiert, die diesem physischen Port 30 zugeordnet sind.

Das Synchronisationsobjekt überwacht dabei permanent, ob Druckdaten innerhalb des ihm zugeordneten Main Threads vorliegen, die von diesem an den Drucker 20 zu übermitteln sind. Wenn das Synchronisationsobjekt dabei innerhalb des Main Threads vorliegende Druckdaten erkennt, unterbricht es die Abfrage von Statusinformationen durch den Status Thread, welche dem Drucker 20 bzw. dem physischen Port zugeordnet ist.

Die Unterbrechung erfolgt vorzugsweise durch eine Deaktivierung der dem Status Thread zugeordneten Steuerungskomponente 90, so dass der Status Thread selbst aktiv bleibt und Daten verarbeiten kann.

Ferner überprüft das Synchronisationsobjekt, ob innerhalb des Main Threads Statusinformationen vorliegen, welche von dem Drucker 20 ausgegeben werde, während er die innerhalb des Main Threads übermittelten Druckdaten empfängt. Wenn dabei innerhalb des Main Thread vorliegende Statusinformationen von dem Synchronisationsobjekt erkannt werden, werden diese an den zugehörigen Status Thread übermittelt.

Somit stehen innerhalb des Status Threads jederzeit aktuelle Statusinformationen zur Verfügung, wobei diesem durch das Synchronisationsobjekt insbesondere auch die Statusinformationen zugänglich gemacht werden, die während der Übertragung von Druckdaten an den Drucker 20 von diesem ausgegeben werden. Es erfolgt somit eine permanente Überwachung des Status' eines Druckers 20.

Die während der Übermittlung von Druckdaten von einem Drucker 20 ausgegebenen Statusinformationen beinhalten dabei insbesondere Fehlermeldungen, die von dem Drucker 20 ausgegeben werden, wenn ein Druckauftrag nicht störungsfrei verarbeitet werden kann. So meldet der Drucker 20 anhand dieser Statusinformationen beispielsweise das Fehlen von Druckmedien, wie beispielsweise Papier, das Fehlen von Verbrauchsmaterialien und weitere Fehler wie beispielsweise Druckmedienstaus innerhalb des Druckmechanismus.

Je nachdem, ob die Behandlung derartiger Fehler ausschließlich durch die Clients des Drucker-Hosts, in dem betrachteten Beispiel also durch die Programme zur Bearbeitung von Geschäftsvorgängen, erfolgen soll, oder ob eine Fehlerbehandlung durch den Drucker-Spooler 10 vorgenommen werden soll, löscht das Synchronisationsobjekt die innerhalb des Main Threads vorliegenden Statusinformationen nach der Übertragung an den Status Thread oder es belässt sie in dem Main Thread.

Wenn die Statusinformationen gelöscht werden, erfolgt keine Weiterleitung der Statusinformationen an den Drucker-Spooler 10, so dass diese ausschließlich in der später beschriebenen Weise innerhalb eines Speichermittels 100 zur Verfügung stehen, aus dem sie durch die Clients ausgelesenen werden können.

Diese Art der Auswertung von während der Übertragung von Druckdaten von einem Drucker 20 ausgegebener Statusinformationen ist, wie bereits erläutert, insbesondere beim Drucken geldwerter Informationen bevorzugt bzw. erforderlich, da die Statusinformationen hier durch die Clients ausgewertet werden sollen. Unnötige Fehlermeldungen durch den Drucker-Spooler 10 oder den Druckertreiber werden hier vermieden.

Da die Statusinformationen, wie später erläutert wird, jedoch von dem Client in einem pull-orientierten Vorgang aus dem Speichermittel 100 ausgelesen werden, entspricht der Zugriff des Clients auf den Drucker 20 bzw. den Drucker-Host bei dieser Art der Fehlerbehandlung einem synchronen Zugriff.

Werden die Statusinformationen in dem Main Thread belassen, so werden sie innerhalb des Main Threads an den Drucker-Spooler 10 weitergeleitet bzw. von diesem an dem entsprechenden logischen Port 80 entgegengenommen, woraufhin die in dem Drucker-Spooler 10 bzw. in dem Druckertreiber implementierten Routinen zur Verarbeitung der Statusinformationen bzw. zur Fehlerbehandlung ausgeführt werden.

Bei einigen bekannten Druckertreibern ist es dabei vorgesehen, dass bei einer von einem Drucker 20 ausgegebenen Fehlermeldungen durch einen push-orientierten Mechanismus eine entsprechende Fehlermeldung an dem Anzeigemittel des PC angezeigt wird, die den Bediener auf den Fehler hinweist.

Diese Art der Fehlerbehandlung, bei der ein asynchroner Zugriff des Clients auf den Drucker 20 bzw. den Drucker-Host möglich ist, ist kann daher bei Druckaufträgen vorteilhaft sein, bei denen die fehlerfreie Durchführung eines von dem Client durchgeführten Vorgangs nicht an den Erfolg einer bestimmten Transaktion gebunden ist bzw. es aus anderen Gründen nicht erforderlich ist, dass die Statusinformationen direkt von einem bestimmten Softwareprogramm ausgewertet werden.

Auch wenn die Statusinformationen innerhalb des Main Threads an den Drucker-Spooler 10 weitergeleitet werden, werden sie jedoch aufgrund der von dem Synchronisationsobjekt vorgenommenen Synchronisation zwischen dem Main Thread und dem Status Thread von diesem in dem Speichermittel 100 hinterlegt und zur Abfrage durch die Clients zur Verfügung gestellt.

Welche der vorbeschriebenen Arten der Fehlerbehandlung erfolgen soll, wird in einem Druckauftrag angegeben, oder durch den Portmonitor40 an der Art des Druckauftrages erkannt.

Ist die Übertragung der Druckdaten innerhalb eines Main Threads abgeschlossen, wird dies von dem zugehörigen Synchronisationsobjekt erkannt, welches die Abfrage von Statusinformationen durch die Steuerungskomponente 90 des entsprechenden Status Threads wieder startet.

Die innerhalb eines Status Threads vorliegenden Statusinformationen über den dem Status Thread zugeordneten Drucker 20 werden in dem Speichermittel 100 hinterlegt, das vorzugsweise als ein so genanntes Shared Memory ausgeführt ist. Dabei handelt es sich um einen Speicherbereich in einem flüchtigen oder nicht-flüchtigen Speicher der Drucker-Hosts bzw. des den Drucker-Host ausführenden Computers, der einen standardisierten Zugriff durch mehrere Clients zulässt. Die Schnittstelle für den Zugriff auf das Shared Memory 100 wird dafür als eine so genannte Interprozesskommunikationsschicht (IPC-Schicht) ausgebildet.

Das Abfragemodul 60 des Portmonitors 40 greift dabei schreibend über die IPC-Schicht auf das Shared Memory 100 zu. Der Zugriff durch einen oder mehrere Clients, die Statusinformationen über die Drucker 20 abfragen, erfolgt lesend.

Innerhalb des Shared Memory 100 werden Speicherbereiche eingerichtet, die jeweils einem physischen Port 30 bzw. einem Drucker 20 zugeordnet sind und mit einer entsprechenden Identifikationsangabe des physischen Ports 30 bzw. des Druckers 20 versehen sind. Jeder Speicherbereich des Shared Memory 100 wird somit von dem Status Thread beschrieben bzw. inhaltlich verändert, der dem entsprechenden physischen Port 30 bzw. Drucker 20 zugeordnet ist.

Der Zugriff auf das Shared Memory 100 erfolgt dabei anhand von Standardbefehlen zur Steuerung der Standardschnittstelle, die in dem Abfragemodul 60 gespeichert sind. Der Zugriff kann dabei von den Steuerungskomponenten 90 vorgenommen werden. Vorzugsweise werden die Steuerbefehle jedoch von einer separaten Komponente des Abfragemoduls 60 bereitgestellt und ausgefürt, um eine redundante Implementerung in jeder Steuerungskomponente 90 zu vermeiden. Dies gestattet insbesondere eine einfache Anpassung bei einer Veränderung der Standardschnittstelle.

In einer bevorzugten Ausführungsform der Erfindung ist es vorgesehen, dass die Statusinformationen innerhalb des Shared Memory 100 nur dann von einem Status Thread verändert werden, wenn der Status des zugehörigen Druckers 20 sich tatsächlich geändert hat. Dies ist jedoch in der Regel nicht bei jeder Statusabfrage der Fall. Vor der Speicherung der Statusinformationen für einen Drucker 20 vergleicht ein Status Thread die abgefragten Statusinformationen daher mit den in dem Shared Memory 100 gespeicherten Statusinformationen. Nach diesem Vergleich werden die Statusinformationen nur dann in das Shared Memory geschrieben, wenn sich die abgefragten Statusinformationen von den gespeicherten Statusinformationen unterscheiden.

Die Clients greifen ebenfalls über die Standardschnittstelle auf das Shared Memory 100 zu. Zur Erhöhung der Datensicherheit kann die Standardschnittstelle so konfiguriert sein, dass sie den Clients dabei ausschließlich lesenden Zugriff gewährt.

Durch die Bereitstellung der Statusinformationen ist es insbesondere möglich, die Erzeugung von Druckaufträgen, die nicht verarbeitet werden können, durch diese Programme zu verhindern bzw. diese Programme anzuhalten, wenn ein Fehler beim Drucken auftritt.

Wird beispielsweise die Einzahlung eines Geldbetrages auf ein Sparbuch oder die Auszahlung eines Geldbetrages von einem Sparbuch bearbeitet, ist es erforderlich, das neue Guthaben innerhalb einer Transaktion in das Sparbuch und in eine Datenbank des Datenverarbeitungssystems einzutragen.

Vor der Erzeugung des entsprechenden Druckauftrages fragt das Vorgangsbearbeitungsprogramm dabei die Statusinformationen über den zur Verarbeitung des Druckauftrages vorgesehenen Sparbuchdrucker ab und ermittelt anhand der Statusinformationen insbesondere, ob der Sparbuchdrucker online ist und ein Sparbuch in den Drucker eingelegt worden ist.

Ist dies nicht der Fall, wird der Druckauftrag zunächst nicht erzeugt, sondern es wird eine Aufforderung zum Einschalten des Druckers bzw. zum Einlegen des Sparbuchs an dem Anzeigemittel dargestellt, die von dem Bediener des Vorgangsbearbeitungsprogramms quittiert wird. Nach dem Empfang eines Quittierungssignals werden erneut Statusinformationen von dem Sparbuchdrucker abgefragt.

Die Erzeugung des Druckauftrages und seine Übermittlung an den Drucker-Host 10 erfolgt nur dann, wenn die Auswertung der Statusinformationen ergeben hat, dass sich ein Sparbuch in dem Sparbuchdrucker befindet.

Damit ist sichergestellt, dass kein Druckauftrag erzeugt wird, der von dem Sparbuchdrucker nicht verarbeitet werden kann.

In ähnlicher Weise führen Fehlermeldungen, die während der Bearbeitung des Druckauftrags durch den Drucker-Host von einem Drucker 20 ausgegeben werden, vorzugsweise dazu, dass das Programm anhält und den Bediener dazu auffordert, den Fehler zu beheben.

Der Abschluss der Transaktion erfolgt innerhalb des Programms nur dann, wenn anhand der Statusinformationen der erfolgreiche Ausdruck festgestellt worden ist.

Die Statusabfrage erhöht somit die Sicherheit des Vorgangs und ist zudem für den Bediener des Programms sehr komfortabel.

Analog kann beispielsweise vor der Erzeugung eines Ausdrucks von Postwertzeichen überprüft werden, ob ein Formularbogen für den Ausdruck in dem vorgesehenen Drucker vorhanden ist.

Die Erfindung ist jedoch nicht auf ein Datenverarbeitungssystem der beschriebenen Art beschränkt, sondern kann in analoger Weise in jedem Drucksystem eingesetzt werden, bei dem Statusinformationen über die verwendeten Drucker 20 benötigt werden.

### Bezugszeichenliste:

- 10: Drucker-Spooler
- 20: Drucker
- 30: Physischer Port
- 40: Portmonitor
- 50: Datenübertragungsmodul
- 60: Abfragemodul
- 70: Synchronisationsmodul
- 80: Logischer Port
- 90: Steuerungskomponente (Business Logic)
- 100: Speichermittel (Shared Memory)

## Patentansprüche

1. Drucksystem mit einem Drucker-Host umfassend einen Drucker-Spooler, der aufbereitete Druckaufträge von einem Druckertreiber erhält und der Druckdaten an wenigstens einen Drucker übermittelt, wobei der Drucker beim Empfang von Druckdaten Statusinformationen bereitstellt, die insbesondere Fehlermeldungen beinhalten, die von dem Drucker ausgegeben werden, wenn ein Druckauftrag nicht störungsfrei verarbeitet werden kann,
**dadurch gekennzeichnet,**
**dass** es ein Datenübertragungsmodul (50) enthält, wobei das Datenübertragungsmodul (50) einen Datenübertragungsstrang bereitstellt, der die Druckdaten von dem Drucker-Spooler (10) empfängt und an den Drucker (20) weiterleitet, und wobei der Datenübertragungsstrang des Datenübertragungsmoduls (50) die beim Empfang der Druckdaten von dem Drucker bereitgestellten Statusinformationen empfängt, dass es ein Abfragemodul (60) enthält, das einen Abfragestrang bereitstellt, der Statusinformationen von dem Drucker (20) abfragt, und dass es ein Synchronisationsmodul (70) enthält, das die von dem Datenübertragungsmodul (50) empfangenen Statusinformationen an das Abfragemodul (60) übermittelt, wobei das Synchronisationsmodul je nachdem, ob die Behandlung von Fehlern ausschließlich durch Clients des Drucker-Host erfolgen soll, oder ob eine Fehlerbehandlung durch den Drucker-Spooler vorgenommen soll, die Statusinformationen nach der Übertragung an den Abfragestrang innerhalb des Datenübertra= gungsstrangs löscht, oder sie in dem Datenübertragungsstrang belässt, wobei in dem Datenübertragungsstrang belassene Statusinformationen an den Drucker-Spooler weitergeleitet werden, woraufhin die in dem Drucker-Spooler oder Druckertreiber implementierten Routinen zur Verarbeitung der Statusinformationen ausgeführt werden, und wobei die Art der Fehlerbehandlung in dem Druckauftrag angegeben ist, oder an der Art des Druckauftrags erkannt wird.

2. Drucksystem nach Anspruch 1,
**dadurch gekennzeichnet,**
**dass** das Synchronisationsmodul (70) die Statusabfrage durch das Abfragemodul (60) unterbricht, während das Datenübertragungsmodul (50) Druckdaten an den Drucker (20) übermittelt.

3. Drucksystem nach einem der vorangegangen Ansprüche,
**dadurch gekennzeichnet,**
**dass** das Abfragemodul (60) eine Steuerungskomponente (90) umfasst, die Steuerbefehle zum Abfragen von Statusinformationen von dem Drucker (20) bereitstellt.

4. Drucksystem nach einem der vorangegangenen Ansprüche,
**dadurch gekennzeichnet,**
**dass** das Datenübertragungsmodul (50) die empfangenen Statusinformationen an den Drucker-Spooler übermittelt.

5. Drucksystem nach einem der vorangegangenen Ansprüche,
**dadurch gekennzeichnet,**
**dass** das Abfragemodul (60) mehrere Statusabfragestränge bereitstellt, wobei jeder Statusabfragestrang Statusinformationen von genau einem dem Statusabfragestrang zugeordneten Drucker (20) abfragt.

6. Drucksystem nach einem der vorangegangenen Ansprüche,
**dadurch gekennzeichnet,**
**dass** jedem Statusabfragestrang eine Steuerungskomponente (90) zugeordnet ist, die Steuerbefehle zum Abfragen von Statusinformationen von dem Drucker (20) enthält, der dem Statusabfragestrang zugeordnet ist.

7. Druckssystem nach einem der vorangegangenen Ansprüche,
**dadurch gekennzeichnet,**
**dass** das Datenübertragungsmodul (50) mehrere Datenübertragungsstränge bereitstellt, wobei jeder Datenübertragungsstrang Druckdaten an genau einen dem Datenübertragungsstrang zugeordneten Drucker (20) übermittelt und Statusinformationen von diesem Drucker (20) empfängt.

8. Drucksystem nach einem der vorangegangenen Ansprüche,
**dadurch gekennzeichnet,**
**dass** das Synchronisationsmodul (70) mehrere Synchronisationsobjekte bereitstellt, wobei jedes Synchronisationsobjekt Statusinformationen von genau einem einem Drucker (20) zugeordneten Datenübertragungsstrang an den demselben Drucker (20) zugeordneten Statusabfragestrang übermittelt.

9. Drucksystem nach einem der vorangegangenen Ansprüche,
**dadurch gekennzeichnet,**
**dass** das Abfragemodul (60) die Statusinformationen in einem Speichermittel (100) speichert.

10. Drucksystem nach einem der vorangegangenen Ansprüche,
**dadurch gekennzeichnet,**
**dass** es eine Standardschnittstelle umfasst, über die das Speichermittel ausgelesen werden kann.

11. Drucksystem nach einem der vorangegangenen Ansprüche,
**dadurch gekennzeichnet,**
**dass** das Abfragemodul (60) die Statusinformationen in regelmäßigen Zeitabständen von dem Drucker (20) abfragt.

12. Drucksystem nach einem der vorangegangenen Ansprüche,
**dadurch gekennzeichnet,**
**dass** das Abfragemodul (60) die von dem Drucker (20) abgefragte erste Statusinformationen mit in dem Speichermittel (100) gespeicherten zweiten Statusinformationen vergleicht, und die ersten Statusinformationen in dem Speichermittel (100) gespeichert werden, wenn diese sich von den zweiten Statusinformationen unterscheiden.

## Claims

1. A printing system with a printer host, comprising a printer spooler that receives edited print jobs from a printer driver and that transmits print data to at least one printer, whereby, when the printer receives print data, it provides status information especially containing error messages that are output by the printer when a print job cannot be processed error-free,
**characterized in that**
said printing system comprises a data transmission module (50), whereby the data transmission module (50) provides a data transmission line that receives the print data from the printer spooler (10) and forwards it to the printer (20), and whereby the data transmission line of the data transmission module (50) receives the status information provided when the print data is received from the printer, **in that** said printing system comprises a request module (60) that provides a request line that requests status information from the printer (20), and **in that** said printing system comprises a synchronization module (70) that transmits the status information received from the data transmission module (50) to the request module (60), whereby, depending on whether the handling of errors is to be performed exclusively by clients of the printer host or whether error handling is to be performed by the printer spooler, the synchronization module deletes the status information in the data transmission line after the transmission to the request line, or else said synchronization module leaves the status information in the data transmission line, whereby status information left in the data transmission line is forwarded to the printer spooler, whereupon the routines implemented in the printer spooler or printer driver are executed in order to process the status information, and whereby the type of error handling is indicated in the print job, or else this is recognized by the type of print job.

2. The printing system according to Claim 1,
**characterized in that**
the synchronization module (70) interrupts the status request by the request module (60), whereas the data transmission module (50) transmits print data to the printer (20).

3. The printing system according to one of the preceding claims,
**characterized in that**
the request module (60) comprises a control component (90) that provides control commands in order to request status information from the printer (20).

4. The printing system according to one of the preceding claims,
**characterized in that**
the data transmission module (50) transmits the received status information to the printer spooler.

5. The printing system according to one of the preceding claims,
**characterized in that**
the request module (60) provides several status request lines, whereby each status request line requests status information from exactly one printer (20) that is associated with the status request line.

6. The printing system according to one of the preceding claims,
**characterized in that**
each status request line is associated with a control component (90) that contains control commands for requesting status information from the printer (20) that is associated with the status request line.

7. The printing system according to one of the preceding claims,
**characterized in that**
the data transmission module (50) provides several data transmission lines, whereby each data transmission line transmits print data to exactly one printer (20) that is associated with the data transmission line and receives status information from this printer (20).

8. The printing system according to one of the preceding claims,
**characterized in that**
the synchronization module (70) provides several synchronization objects, whereby each synchronization object transmits status information from exactly one data transmission line associated with one printer (20) to the status request line associated with that particular printer (20).

9. The printing system according to one of the preceding claims,
**characterized in that**
the request module (60) stores the status information in a storage means (100).

10. The printing system according to one of the preceding claims,
**characterized in that**
it comprises a standard interface via which the storage means can be read out.

11. The printing system according to one of the preceding claims,
**characterized in that**
the request module (60) requests the status information from the printer (20) at regular time intervals.

12. The printing system according to one of the preceding claims,
**characterized in that**
the request module (60) compares the first status information that has been requested from the printer (20) to second status information that is stored in the storage means (100), and the first status information is stored in the storage means (100) if it differs from the second status information.

## Revendications

1. Système d'impression avec un hôte pour imprimante, comprenant un spouleur d'imprimante qui reçoit des ordres d'impression mis en forme d'un pilote d'imprimante et transmet des données d'impression à au moins une imprimante, l'imprimante
fournissant, à la réception de données d'impression, des informations de statut qui contiennent notamment des messages d'erreur émis par l'imprimante lorsqu'un ordre d'impression ne peut pas être traité sans défaut, **caractérisé en ce qu'**il contient un module de transmission de données (50), le module de transmission de données (50) fournissant une chaîne de transmission de données qui reçoit les données d'impression du spouleur d'imprimante (10) et les retransmet à l'imprimante (20) et la chaîne de transmission de données du module de transmission de données (50) recevant les informations de statut fournies par l'imprimante à la réception des données d'impression, **en ce qu'**il contient un module d'interrogation (60) qui fournit une chaîne d'interrogation qui demande des informations de statut à l'imprimante (20) et **en ce qu'**il contient un module de synchronisation (70) qui transmet au module d'interrogation (60) les informations de statut reçues par module de transmission de données (50), le module de synchronisation, suivant que le traitement d'erreurs doit être effectué exclusivement par des clients de l'hôte pour imprimante ou qu'un traitement d'erreurs doit être effectué par le spouleur d'imprimante, effaçant les informations de statut dans la chaîne de transmission de données après la transmission à la chaîne d'interrogation ou les laissant dans la chaîne de transmission de données, des informations de statut laissées dans la chaîne de transmission de données étant retransmises au spouleur d'imprimante, suite à quoi les routines implémentées dans le spouleur d'imprimante ou le pilote d'imprimante sont exécutées pour le traitement des informations de statut et le type du traitement d'erreur étant indiqué dans l'ordre d'impression ou étant identifié à l'aide du type de l'ordre d'impression.

2. Système d'impression selon la revendication 1, **caractérisé en ce que** le module de synchronisation (70) interrompt l'interrogation de statut par le module d'interrogation (60) pendant que le module de transmission de données (50) transmet des données d'impression à l'imprimante (20).

3. Système d'impression selon l'une des revendications précédentes, **caractérisé en ce que** le module d'interrogation (60) comprend une composante de commande (90) qui fournit des ordres de commande pour demander des informations de statut à l'imprimante (20).

4. Système d'impression selon l'une des revendications précédentes, **caractérisé en ce que** le module de transmission de données (50) transmet au spouleur d'imprimante les informations de statut reçues.

5. Système d'impression selon l'une des revendications précédentes, **caractérisé en ce que** le module d'interrogation (60) fournit plusieurs chaînes d'interrogation de statut, chaque chaîne d'interrogation de statut demandant des informations de statut à exactement une imprimante (20) associée à la chaîne d'interrogation de statut.

6. Système d'impression selon l'une des revendications précédentes, **caractérisé en ce qu'**est associée, à chaque chaîne d'interrogation de statut, une composante de commande (90) qui contient des ordres de commande pour demander des informations de statut à l'imprimante (20) qui est associée à la chaîne d'interrogation de statut.

7. Système d'impression selon l'une des revendications précédentes, **caractérisé en ce que** le module de transmission de données (50) fournit plusieurs chaînes de transmission de données, chaque chaîne de transmission de données transmettant des données d'impression à exactement une imprimante (20) associée à la chaîne de transmission de données et recevant des informations de statut de cette imprimante (20).

8. Système d'impression selon l'une des revendications précédentes, **caractérisé en ce que** le module de synchronisation (70) fournit plusieurs objets de synchronisation, chaque objet de synchronisation transmettant des informations de statut d'exactement une chaîne de transmission de données associée à une imprimante (20) à la chaîne d'interrogation de statut associée à la même imprimante (20).

9. Système d'impression selon l'une des revendications précédentes, **caractérisé en ce que** le module d'interrogation (60) stocke les informations de statut dans un moyen de mémoire (100).

10. Système d'impression selon l'une des revendications précédentes, **caractérisé en ce qu'**il comprend une interface standard via laquelle le moyen de mémoire peut être lu.

11. Système d'impression selon l'une des revendications précédentes, **caractérisé en ce que** le module d'interrogation (60) demande les informations de statut à l'imprimante (20) à intervalles de temps réguliers.

12. Système d'impression selon l'une des revendications précédentes, **caractérisé en ce que** le module d'interrogation (60) compare les premières informations de statut demandées à l'imprimante (20) avec des deuxièmes informations de statut stockées dans le moyen de mémoire (100) et les premières informations de statut sont stockées dans le moyen de mémoire (100) lorsqu'elles sont différentes des deuxièmes informations de statut.
